# EUROPÄISCHE PATENTANMELDUNG

(11) **EP 1 716 966 A2**
(43) Veröffentlichungstag der Anmeldung: **02.11.2006**
(21) Anmeldenummer: 06007051.3
(22) Anmeldetag: 03.04.2006
(51) Int. Cl.: B23P 15/00, F16D 3/223

(54) **Verfahren zur Herstellung von Kugelnaben von Gleichlaufgelenken**

(30) Priorität: 25.04.2005 DE 102005019160
(71) Anmelder: EMAG Holding GmbH, 73084 Salach (DE)
(72) Erfinder: Walz, Jürgen, Dr., 72636 Frickenhausen (DE); Mässelhäuser, Ralph, 73312 Geislingen an der Steige (DE)
(74) Vertreter: Zmyj, Erwin

(57) **Zusammenfassung**

Bei der Herstellung einer Kugelnabe (1) für ein Gleichlaufgelenk von Kraftfahrzeugen wird zunächst das zentrale Steckprofil (2) durch spanlose Verformung hergestellt, worauf der Rohling der Kugelnabe auf einem dem Steckprofil angepassten Spanndorn aufgenommen wird. Danach erfolgt die Herstellung der Führungsbahnen (3) mittels Schruppfräsen und Schlichtfräsen, worauf die Herstellung der kugelförmigen Lagerfläche (4) durch eine Drehbearbeitung erfolgt. Eine zwischen der Führungsbahn (3) und der Lagerfläche (4) liegende Fase wird während des Schruppfräsens bearbeitet.

## Beschreibung

Die Erfindung bezieht sich auf ein Verfahren zur Herstellung von Kugelnaben von Gleichlaufgelenken, insbesondere für Kraftfahrzeuge, mit mehreren im wesentlichen axial verlaufenden Führungsbahnen zur Aufnahme der im Kugelkäfig gehaltenen Kugeln und einem vom Kreisquerschnitt abweichenden Steckprofil für die Aufnahme einer Antriebswelle.

Bei Kraftfahrzeugen mit Vorderradantrieb müssen die Festgelenke sowohl das Ein- und Ausfedern der Räder als auch deren Lenkbewegungen ermöglichen. Dazu sind die Führungsbahnen für die Kugeln solcher Gleichlaufgelenke in axialer Richtung gekrümmt. An den Hinterachswellen kommen Gleichlaufverschiebegelenke zum Einsatz, die außer der Beugung des Gelenkes eine axiale Verschiebung zulassen. Solche Gelenke sind mit eben verlaufenden Führungsbahnen für die Kugeln versehen, die gegenüber der Nabenachse um einen Winkel geneigt sind. Die Kugelnaben weisen für beide Anwendungsfälle eine zentrische Bohrung mit einem vom Kreisquerschnitt abweichenden Steckprofil auf, um eine Antriebswelle aufnehmen zu können.

Kugelnaben für Gleichlaufverschiebegelenke werden bevorzugt durch Warmschmieden aus Kohlenstoffstahl vorgeformt. Nach dem Abkühlen werden die Innenbohrung, die Planflächen und die Außendurchmesser drehend bearbeitet. Anschließend werden die Kugellaufbahnen durch Fräsen oder Räumen hergestellt. Die Bearbeitung des innenliegenden Steckprofils erfolgt durch Räumen oder Stoßen. Daran schließt sich das induktive Härten an.

Ferner ist es bekannt, die Rohlinge für Festgelenke aus Einsatzstahl zu fertigen. Diese Stähle lassen sich kalt umformen. In der Querfließpresse wird die Kugelbahngeometrie und der Außendurchmesser fertig gepresst. Nach dem Pressen erfolgt die Drehbearbeitung der Bohrung und der Anlageflächen. Sodann erfolgt die Bearbeitung des innenliegenden Steckprofils durch Räumen oder Stoßen. Dann werden die Kugelnaben gehärtet.

Aus der EP 0 921 329 B 1 ist es bekannt, sowohl die kugelringförmige Lagerfläche als auch die Führungsbahnen durch Drehen herzustellen, wobei für die Herstellung der Führungsbahnen offensichtlich ein ganz spezielles Drehverfahren zum Einsatz kommt.

Bei allen bekannten Verfahren werden nach dem Warmschmieden oder Kaltumformen die Innenbohrung und die Anlageflächen durch Drehen bearbeitet und anschließend wird das Steckprofil durch Räumen oder Stoßen hergestellt. Dies ist eine aufwändige Arbeitsfolge.

Aufgabe der Erfindung ist es, ein Verfahren zur Herstellung von Kugelnaben für Gleichlaufgelenke anzugeben, welches eine einfache kostengünstige Herstellung ermöglicht.

Ausgehend von einem Verfahren nach dem Oberbegriff des Anspruchs 1 wird diese Aufgabe gelöst durch die nachfolgenden Verfahrensschritte
a) Erstellen des verwendungsfähigen Steckprofils durch spanlose Verformung
b) Aufnehmen der Kugelnabe auf einem dem hergestellten Steckprofil angepassten Spanndorn, und
c) Weichbearbeitung der Führungsbahnen durch spanende Bearbeitung

Durch die verwendungsfähige Herstellung des Steckprofils der Kugelnabe können die Bearbeitungsvorgänge wie Räumen oder Stoßen eingespart werden, so dass eine Kugelnabe nach diesem ersten Verfahrensschritt vorliegt, die auf einem Spanndorn für die weitere Bearbeitung aufgenommen werden kann, ohne dass verschiedene Verfahrensschritte mit entsprechenden Umspannungen des Werkstückes ausgehend von der Herstellung des Steckprofils bis zur Bearbeitung der anderen Flächen eingesetzt werden müssen. Dies verkürzt nicht nur die Bearbeitungszeit, sondern erhöht auch die Fertigungsgenauigkeit, weil die Kugelnabe nach dem spanlosen Herstellen des Steckprofils auf einen dem hergestellten Steckprofil entsprechenden Spanndorn aufgenommen werden kann, auf dem die Kugelnabe für die weiteren Bearbeitungsschritte verbleibt. Hierdurch ist eine genaue Zuordnung sowohl der kugelförmigen Lagerfläche als auch der Führungsbahnen zum Steckprofil gegeben, so dass hier Zuordnungstoleranzen vermieden werden können und auch die Bearbeitungszeit wesentlich verkürzt wird.

Um das Aufnehmen der Kugelnabe auf einem dem hergestellten Steckprofil angepassten Spanndorn zu verbessern, ist es zweckmäßig, mindestens an einer Stirnseite des Rohlings des Gleichlaufgelenkes durch spanlose Verformung eine senkrecht zur Werkstücksymmetrieachse stehende Anlagefläche zu erstellen. Hierdurch kann die Kugelnabe auf dem Spanndorn gegen einen Anschlag gedrückt werden, wodurch die Halterung der Kugelnabe während der weiteren Bearbeitung verbessert wird.

Zur Herstellung von Gleichlaufverschiebegelenken mit einer kugelförmigen Lagerfläche für die Lagerung in einem Kugelkäfig ist erfindungsgemäß vorgesehen, dass die Lagerfläche durch Weichbearbeitung mittels spanender Bearbeitung erfolgt.

Vorzugsweise erfolgt die Herstellung der Führungsbahnen durch Fräsen.

Dabei werden in vorteilhafter Weise die Führungsbahnen zunächst durch Schruppfräsen bearbeitet und dann durch Schlichtfräsen fertigbearbeitet.

Die Herstellung der kugelförmigen Lagerfläche erfolgt vorzugsweise durch Drehen.

In vorteilhafter Ausgestaltung der Erfindung wird eine zwischen der Führungsbahn und der Lagerfläche liegende Fase während der Bearbeitung der Führungsbahn durch Schruppfräsen hergestellt, wodurch ein zusätzlicher Arbeitsgang vermieden werden kann.

Schließlich wird die Kugelnabe nach der spanlosen und der spanenden Bearbeitung gehärtet, wobei das Härten entweder durch Einsatzhärten oder durch induktive Härtung erfolgt.

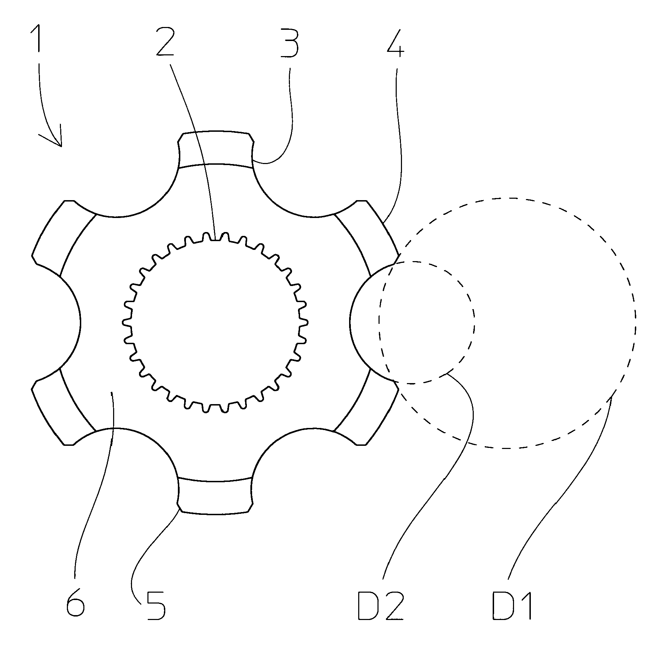

Die Erfindung wird nachfolgend anhand eines in der Zeichnung dargestellten Ausführungsbeispieles näher erläutert.

Die einzige Figur zeigt eine Kugelnabe in axialer Richtung betrachtet.

Eine insgesamt mit 1 bezeichnete Kugelnabe für Gleichlaufgelenke weist eine innere zentrale Ausnehmung mit einem Steckprofil 2 in Form einer Kerbverzahnung auf. Dieses Steckprofil wird durch spanloses Verformen, und zwar je nach verwendetem Stahl, entweder durch Warmverformen oder durch Kaltumformen (Querfließpressen) hergestellt. Nach der Herstellung dieses Steckprofils wird der Rohling auf einen diesem Steckprofil angepassten und in der Zeichnung nicht dargestellten Spanndorn aufgenommen. Hieran schließt sich dann eine Weichbearbeitung der mit 3 bezeichneten Führungsbahnen an, was insbesondere zunächst durch Schruppfräsen und dann durch Schlichtfräsen erfolgt. Die Bearbeitung der mit 4 bezeichneten Lagerfläche erfolgt durch Drehen. Mit 5 sind Fasen bezeichnet, die sich zwischen der Führungsbahn 3 und der Lagerfläche 4 befinden. Diese Fasen werden während des Schruppfräsens hergestellt, so dass ein weiterer zusätzlicher Arbeitsvorgang entfällt.

Mit den Bezugszeichen D1 und D2 sind die Durchmesser einerseits der Fase 5 und andererseits der Führungsbahn 3 bezeichnet.

Mit 6 ist eine Stirnfläche der Kugelnabe bezeichnet, die zur besseren Aufnahme auf einen Spanndorn durch spanlose Verformung bearbeitet wird, so dass eine senkrecht zur Werkstückslängsachse stehende Anlagefläche entsteht, die bei der Bearbeitung der Kugelnabe an einen Anschlag des Spanndornes geschoben werden kann, um eine bessere Halterung des Werkstückes zu ermöglichen.

## Patentansprüche

1. Verfahren zur Herstellung von Kugelnaben von Gleichlaufgelenken, insbesondere für Kraftfahrzeuge, mit mehreren im wesentlichen axial verlaufenden Führungsbahnen zur Aufnahme der im Kugelkäfig gehaltenen Kugeln und einem vom Kreisquerschnitt abweichenden Steckprofil für die Aufnahm einer Antriebswelle **gekennzeichnet durch** die nachfolgenden Verfahrensschritte
a) Erstellen des verwendungsfähigen Steckprofils **durch** spanlose Verformung
b) Aufnehmen der Kugelnabe auf einem dem hergestellten Steckprofil angepassten Spanndorn und
c) Weichbearbeitung der Führungsbahnen **durch** spanende Bearbeitung

2. Verfahren nach Anspruch 1, **dadurch gekennzeichnet, dass** mindestens an einer Stirnseite des Rohlings des Gleichlaufgelenkes durch spanlose Verformung eine senkrecht zur Werkstücksymmetrieachse stehende Anlagefläche erstellt wird.

3. Verfahren nach Anspruch 1 oder 2 zur Herstellung von Gleichlaufverschiebegelenken mit einer kugelförmigen Lagerfläche für die Lagerung in einem Kugelkäfig, **dadurch gekennzeichnet, dass** die Lagerfläche durch Weichbearbeitung mittels spanender Bearbeitung erfolgt.

4. Verfahren nach einem der Ansprüche 1 bis 3, **dadurch gekennzeichnet, dass** die Herstellung der Führungsbahnen durch Fräsen erfolgt.

5. Verfahren nach Anspruch 4, **dadurch gekennzeichnet, dass** die Führungsbahnen zunächst durch Schruppfräsen bearbeitet und dann durch Schlichtfräsen fertigbearbeitet werden.

6. Verfahren nach Anspruch 3, **dadurch gekennzeichnet, dass** die Herstellung der kugelförmigen Lagerflächen durch Drehen erfolgt.

7. Verfahren nach einem der Ansprüche 1 bis 6, **dadurch gekennzeichnet, dass** eine zwischen der Führungsbahn und der Lagerfläche liegende Fase während der Bearbeitung der Führungsbahn durch Schruppfräsen hergestellt wird.

8. Verfahren nach einem der Ansprüche 1 bis 7, **dadurch gekennzeichnet, dass** die Kugelnabe nach der spanlosen und der spanenden Bearbeitung gehärtet wird.
